Europäisches Patentamt

European Patent Office

Office européen des brevets

(19)

(11) Numéro de publication: **0 027 486**
**B1**

(12) **FASCICULE DE BREVET EUROPEEN**

(45) Date de publication du fascicule du brevet: **13.04.83**

(51) Int. Cl.³: **C 04 B 7/40**

(21) Numéro de dépôt: **79870024.1**

(22) Date de dépôt: **18.10.79**

(54) **Procédé de réduction de la consommation calorifique des fours de cimenterie en voie humide par réduction de la teneur en eau de cru.**

(43) Date de publication de la demande:
**29.04.81 Bulletin 81/17**

(45) Mention de la délivrance du brevet:
**13.04.83 Bulletin 83/15**

(84) Etats contractants désignés:
**BE FR GB**

(56) Documents cités:
**AT - B - 1 810**
**BE - A - 717 488**
**CH - A - 335 989**
**DE - A - 2 546 949**
**DE - B - 1 052 291**
**DE - B - 1 295 458**
**DE - C - 299 473**

(73) Titulaire: **CIMENTS D'OBOURG, Société Anonyme**
**2, rue des Fabriques**
**B-7048 Obourg (BE)**

(72) Inventeur: **Degre, Jean-Pierre**
**Square Mabille, 4**
**B-7078 Le Roeulx (BE)**

(74) Mandataire: **Kuborn, Jacques et al,**
**Office Hanssens S.P.R.L. Square Marie-Louise, 40 (bte 19)**
**B-1040 Bruxelles (BE)**

**Le dossier contient des informations techniques présentées postérieurement au dépôt de la demande et ne figurant pas dans le présent fascicule.**

Courier Press, Leamington Spa, England.

# 0 027 486

Procédé de réduction de la consommation calorifique des fours de cimenterie en voie humide par réduction de la teneur en eau de cru

La présente invention a pour objet un procédé de fabrication de ciment permettant d'importantes économies de combustible, sans augmenter sensiblement le nombre d'opérations en cours de fabrication, et en permettant la réinjection dans le four d'une importante quantité de poussières de récupération entraînées par les gaz d'échappement, le procédé étant mis en oeuvre à l'aide d'un appareillage relativement simple et peu coûteux tant à l'installation qu'en fonctionnement.

A ce jour, l'on connaît essentiellement deux procédés de fabrication du ciment.

Le premier et le plus ancien de ces procédés, dit "en voie humide", consiste à délayer et broyer ensemble les divers constituants pour former une pâte homogène, suffisamment fluide pour permettre son acheminement vers un four par pompage. Cette pâte ou "cru" est constituée principalement de craie, de divers ajouts tels que argile ou sable pour l'apport de silice, charbon (schistes houillers) ou bauxite pour l'apport d'aluminium, et matières ferrugineuses pour l'apport de fer, et d'eau. Lors de son passage dans le four, l'eau contenue dans la pâte est vaporisée, le produit sec étant ensuite calciné pour sortir sous forme de clinker. Dans ce procédé, le broyage et mélange des divers constituants est aisément réalisé à l'aide d'un dispositif simple, et la quantité de poussières entraînée dans les gaz d'échappement du four est relativement réduite. Par contre, l'évaporation de l'eau contenue dans la pâte nécessite une importante consommation de combustible, et l'incorporation de poussières de récupération à la pâte avant son introduction dans le four n'est pas possible, étant donné que cette poussière contient une proportion non négligeable de chaux libre, ayant une très grande affinité pour l'eau et pouvant faire floculer la pâte.

Le second procédé, dit "en voie sèche", consiste à sécher les divers constituants, à les broyer et à les mélanger à l'état sec; ce mélange est ensuite introduit dans le four où il est calciné pour former le clinker. Ce procédé permet de réaliser une économie de combustible très importante par rapport au procédé en voie humide. Par contre, le séchage, broyage et mélange des matières à l'état sec nécessite de nombreuses manipulations, et d'autre part la quantité de poussières entraînée par les gaz d'échappement dans le four est extrêmement importante. La récupération de ces poussières nécessite la construction d'installations volumineuses et onéreuses, dont la consommation d'énergie, en fonctionnement, n'est pas négligeable.

La réinjection éventuelle dans le four des poussières de récupération ne pose pas de problèmes particuliers dans le procédé dit en voie sèche; des poussières sont en effet ajoutées au mélange des constituants à l'état sec préalablement à son introduction dans le four.

La réinjection des poussières dans le four dans un procédé en voie humide s'effectue en général par la flamme. Ce procédé est assez peu satisfaisant étant donné que l'on réduit ainsi sensiblement la température de la flamme et qu'une partie non négligeable de ces poussières est entraînée dans les gaz de combustion. Le brevet BE—A—717.488 au nom de la déposante a déjà proposé une solution consistant à former des granules à l'aide d'un mélange de pâte contenant la craie et les diverses matières d'ajout avec des poussières de récupération, et à réinjecter ces granules à l'entrée du four, dans le courant de pâté. Ce brevet vise donc la réinjection des poussières de récupération à l'entrée du four, et, par suite de la faible teneur en humidité des poussières ajoutées, révèle un moyen de réduire la teneur en eau du cru.

La présente invention a pour objet un procédé de fabrication du ciment permettant de conserver les avantages du procédé dit en voie humide, c'est-à-dire installation relativement peu coûteuse, manipulation réduite des matières premières et faible quantité de poussières entraînée dans les gaz d'échappement du four, tout en permettant une réinjection importante des poussières récupérées dans les gaz d'échappement du four et ceci en réduisant encore sensiblement la consommation de combustible par rapport aux procédés connus. Le procédé mis au point pour atteindre ces buts est basé sur les faits et constatations suivants:

— la conception actuelle des chaînages confère une grande maîtrise dans la conduite des fours en voie humide, permettant des déplacements de la zone plastique de la pâte dans le four,

— l'homogénéité des divers constituants à l'entrée du four en voie humide n'est pas une condition indispensable à l'obtention d'un produit de qualité, tout le four, en particulier la zone des chaînages exerçant une action d'homogénéisation des produits introduits dans le four; seule doit être prise en considération la proportion des divers constituants entre eux,

— les matières d'ajout, étant en général floculantes, accroissent la viscosité de la pâte et, de ce fait, nécessitent l'adjonction d'une quantité supplémentaire d'eau de délayage.

Le procédé suivant l'invention vise dès lors essentiellement à atteindre une réduction accrue de la teneur en eau de cru introduit dans les fours de cimenterie fonctionnant en voie humide, et se caractérise en ce que l'on injecte à l'entrée du four des granules et un courant de pâte dont les compositions en matières sèches sont différentes, le total des constituants contenus dans les granules et le courant de pâte conduisant à la composition voulue du clinker produit, la pâte est obtenue par délayage d'une partie seulement des constituants du cru, le courant de pâte à l'entrée du four est formé d'une partie au moins de la pâte ainsi obtenue, les granules sont formés en amenant à un granulateur au moins le complément des constituants du cru, à leur humidité naturelle, auquel sont éventuellement ajoutées des matières apportant ou absorbant de l'eau pour régler la teneur totale en humidité de la matière constituant les granules à une valeur comprise entre 14 et 18%, les granules sont injectées dans le courant de pâte à l'entrée du four dans une proportion respectant les déplacements admissibles de la zone plastique du courant de pâte dans un four fonctionnant en voie humide.

Dans la présente description, on entend par "craie" les roches généralement utilisées par les cimenteries, et contenant au moins environ 80% de $CaCO_3$ ainsi que diverses impuretés telles que notamment Si, Al et Fe, en quantités toutefois insuffisantes pour donner une composition de cru satisfaisante Ces impuretés sont présentes dans la roche en proportions variables, de sorte que les matières d'ajout nécessaires pour atteindre une composition de cru satisfaisante doivent également être ajoutées à la craie en proportions variables.

Les efforts réalisés ces dernières années en vue d'économiser le combustible ont amené, dans le domaine de la fabrication du ciment en voie humide, à des recherches en vue de réduire la teneur en eau du cru introduit dans le four sous forme de pâte. Dans cette optique on a préconisé d'incorporer à la pâte des matières défloculantes qui permettant, pour une même fluidité de pâte, de réduire dans des proportions importantes les quantités d'eau. C'est ainsi que des pâtes qui précédemment présentaient des teneurs en eau de l'ordre de 40% ont vu, par l'adjonction de ces matières, leur teneur en eau réduite aux environs de 31 à 32%.

Compte tenu de la composition de la pâte, il n'a cependant pas été possible jusqu'à présent du réduire davantage les quantités d'eau, étant donné que la pâte doit pouvoir être pompée vers le four.

La présente invention apporte une autre solution à ce problème en prévoyant d'introduire dans le four une partie des matières premières entrant dans la composition du cru, délayées par adjonction d'eau sous forme de pâte, et l'autre partie des matières premières, à leur humidité naturelle, sous forme de granules. Le degré d'humidité pour former les granules est amené à la valeur voulue de 14 à 18% par l'adjonction dans le granulateur, aux matières premières à leur humidité naturelle, soit de poussières de récupération lorsque la teneur en humidité des matières premières est trop élevée, ce qui sera le cas le plus fréquent, soit de pâte lorsque la teneur en humidité des matières premières est trop faible.

La pâte est introduite dans le four par pompage, et les granules sont injectés dans le courant de pâte à l'entrée du four.

Ce procédé permet, par rapport au procédé classique d'introduction du cru dans le four sous forme de pâte, une importante réduction de la quantité d'eau utilisée.

Une économie complémentaire peut encore être réalisée, suivant un mode de réalisation préféré de l'invention, en introduisant sélectivement sous forme de pâte, les matières premières dont la viscosité est le plus rapidement abaissée par adjonction d'eau, et sous forme de granules les autres matières.

En pratique, l'on introduit dans le four, par délayage, la craie avec adjonction de matières défloculantes, et incorporation, par délayage, des proportions variables de matières d'ajout strictement nécessaires pour former une pâte de composition constante, cette pâte contenant environ 27% d'eau, et l'on introduit sous forme de granules les proportions constantes de matières d'ajout nécessaires pour obtenir à l'entrée du four, après injection des granules, un cru de composition requise.

Afin de mieux mettre en lumière les économies pouvant être réalisées à laide du procédé de l'invention, nous examinerons ci-après le bilan en eau d'un cru réalisé entièrement sous forme de pâte de la manière conventionnelle, et d'un cru, réalisé à partir des mêmes matières premières, dans le cas où l'on introduit sous forme de pâte les matières premières dont la viscosité est le plus rapidement abaissée, et sous forme de granules les autres matières.

Dans cet exemple on suppose que les caractéristiques des matières premières dont dispose la cimenterie sont les suivantes:

craie: humidité naturelle: 22%
argiles: humidité naturelle: 18%
argiles: pertes au feu: 5%
combustibles (principalement schistes houillers):
humidité naturelle: 20%
pertes au feu: 35%
fer (pyrites): humidité naturelle: 2,6%.

Les quantités données dans les divers tableaux ciaprès sont relatives au poids de matières nécessaires pour obtenir 100 kg. de clinker.

Le tableau I donne la composition d'un cru réalisé entièrement sous forme de pâte, dans lequel la craie est introduite à son humidité naturelle, tandis que les argiles sont délayées à 41,9%, les combustibles sont délayés à 46% et le fer est délayé à 38%

TABLEAU I

| Matières | % (1) | Poids de matières sèches (kg) | Poids d'eau (kg) | Poids total (kg) |
|---|---|---|---|---|
| CRAIE | 86,33 | 129,75 | 36,6 (2) | 166,35 |
| ARGILES | 7,35 | 11,05 | 7,97 | 19,02 |
| COMBUSTIBLES | 3,68 | 5,53 | 4,71 | 10,24 |
| FER | 2,33 | 3,5 | 2,15 | 5,65 |
| FLUIDIFIANTS | 0,31 | 0,46 | – | 0,46 |
| TOTAL DU CRU | 100 | 150,29 | 69,59 | 218,88 |

(1) calculé sur base du poids de matières sèches.
(2) eau amenée par la craie.

La composition de ce cru, contenant sous forme de pâte la totalité de la craie et des diverses matières d'ajout, fait qu'une fluidité suffisante pour permettre le pompage de la pâte, n'est atteinte que pour une dilution à 31,5% d'eau, ou, dans les conditions examinées, pour un poids d'eau de 69,59 kg pour 150,29 kg de matières sèches, et un poids total de cru de 219,88 kg.

Le tableau II donne la répartition des diverses matières pour un cru réalisé à partir des mêmes matières premières, mais dans lequel 80% (en poids sec) des matières d'ajout (argiles, combustibles, fer) à leur humidité naturelle sont introduits sous forme de granules, les 20% restants étant ajoutés à la craie sous forme de pâte aux dilutions indiquées précédemment, c'est-à-dire 41, 9% pour les argiles, 46% pour les combustibles et 38% pour le fer.

TABLEAU II

| Matières | % (1) | Mode d'introduction | Poids sec | Poids d'eau | Poids total |
|---|---|---|---|---|---|
| CRAIE | 86,33 | Pâte | 129,75 | 36,6 (2) | 166,35 |
| ARGILES | 7,35 | Granules | 8,84 | 1,94 | 10,78 |
| | | Pâte | 2,21 | 1,59 | 3,80 |
| | | TOTAL: | 11,05 | 3,53 | 14,58 |
| COMBUSTIBLES | 3,68 | Granules | 4,42 | 1,11 | 5,53 |
| | | Pâte | 1,11 | 0,95 | 2,06 |
| | | TOTAL: | 5,53 | 2,06 | 7,59 |
| FER | 2,33 | Granules | 2,80 | 0,08 | 2,88 |
| | | Pâte | 0,70 | 0,43 | 1,13 |
| | | TOTAL: | 3,50 | 0,51 | 4,01 |
| FLUIDIFIANTS | 0,31 | Pâte | 0,46 | – | 0,46 |

(1) calculé sur base du poids de matières sèches.
(2) eau amenée par la craie.

La composition de la pâte formée de la craie et de 20% des matières fait qu'une fluidité suffisante pour permettre le pompage est atteinte pour une dilution à 26,8% d'eau, valeur que l'on a arrondie dans le bilan en eau du cru à 27%. Les matières d'ajout exercent sur la pâte une action floculante; und diminution de la quantité de matières d'ajout présentes dans le pâte est donc bénéfique du point de vues des besoins en eau de la pâte. Le bin en eau du cru est dès lors le suivant (tableau III).

TABLEAU III

| | Poids sec | Poids d'eau | Total |
|---|---|---|---|
| Pâte (craie + 20% des matières d'ajout) diluée à 27% | 134,23 | 49,65 | 183,88 |
| Granules (80% des matières d'ajout a leur humidité naturelle) | 16,06 | 3,13 | 19,19 |
| TOTAL CRU: | 150,29 | 52,78 | 203,07 |

Le gain en eau est donc:

69,59 (poids d'eau du cru suivant la méthode conventionnelle)

−52,78 (poids d'eau du cru suivant le procédé de l'invention)

16,81 kg d'eau/100 kg de clinker produit.

Dans l'hypothèse d'une production de 1.800.000 t. de clinker par an, si l'on admet que, compte tenu du rendement du four, l'évaporation d'un kg d'eau du cru nécessite 800 kcal., on s'aperçoit que dans l'exemple donné, le procédé de l'invention permet d'éviter l'évaporation de $1,8.10^6 \times 168,1 = 302,580.10^6$ kg d'eau par an.

Ceci représente une économie d'environ 242.000 Gcal.

Considérant que le coût moyen de la Gcal. s'établit actuellement aux environs de 250 FB, l'économie annuelle réalisée dans l'hypothèse envisagée ci-dessus s'élèverait approximativement à 60,5 millions de FB.

Etant donné que dans les cimenteries l'on dispose généralement d'une relativement grande quantité de calories non utilisées (calories récupérées dans les échangeurs de refroidissement du clinker à la sortie du four, calories présentes dans les gaz d'échappement du four, etc), un mode de réalisation préféré de l'invention consiste à sécher les granules préalablement à leur introduction dans le four.

Suivant ce mode de réalisation préféré de l'invention, on amène au granulateur en plus des matières d'ajout la totalité des poussières récupérées, ainsi que la quantité correspondante de pâte nécessaire pour permettre une production de granules à 14 à 18% d'humidité. Cet accroissement de la quantité de poussières incorporées aux granules permet de conférer à ceux-ci, lors du séchage, une dureté et une résistance mécanique suffisante pour éviter leur désagrégation sous les diverses contraintes auxquelles ils sont soumis lors de leur acheminement vers et de leur injection dans le four.

L'invention a été décrite à simple titre d'exemple nullement limitatif, et il va de soi que de nombreuses modifications peuvent être apportées à sa réalisation sans s'écarter de son esprit.

**Revendications**

1. Procédé de fabrication de ciment en voie humide suivant lequel, en vue de réduire la teneur en eau de cru:
— on injecte à l'entré du four des granules et un courant de pâte dont les compositions en matières sèches sont différentes, le total des constituants contenus dans les granules et le courant de pâte conduisant à la composition voulue du clinker produit,
— la pâte est obtenue par délayage d'une partie seulement des constituants du cru,
— le courant de pâte à l'entrée du four est formé d'une partie au moins de la pâte ainsi obtenue,
— les granules sont formés en amenant à un granulateur au moins le complément des constituants du cru, à leur humidité naturelle, auquel sont éventuellement ajoutées des matières apportant ou absorbant de l'eau pour régler la teneur totale en humidité de la matière constituant les granules à une valeur comprise entre 14 et 18%,
— les granules sont injectés dans le courant de pâte à l'entrée du four dans une proportion respectant les déplacements admissibles de la zone plastique du courant de pâte dans un four fonctionnant en voie humide.

2. Procédé suivant 1, caractérisé en ce que l'on forme la pâte au moins en majeure partie avec les constituants du cru dont la viscosité est le plus rapidement abaisée par l'adjonction d'eau, et en ce que l'on amène au granulateur, à leur humidité naturelle, les constituants du cru n'entrant pas dans la formation de la pâte.

3. Procédé suivant 1 et 2, caractérisé en ce que
a) l'on délaye la craie avec de l'eau et des fluidifiants,
b) on délaye et incorpore à la craie, en proportions variables, les matières d'ajout nécessaires pour compenser les variations de qualité de la craie, afin d'obtenir une pâte de qualité constante à teneur en eau comprise entre 25 et 35%, et de préférence entre 26 et 28%,
c) on amène au granulateur, en proportions constantes par rapport à la pâte introduite dans le four, les matières d'ajout nécessaires pour, en mélange avec la pâte de qualité constante, donner la composition de cru voulue,
d) on règle éventuellement respectivement à l'aide d'une partie de la pâte obtenue au cours de l'étape b) dans le cas d'un défaut d'humidité des matières d'ajout et à l'aide des poussières de récupération dans le cas d'un excès d'humidité, le degré total d'humidité des matières admises au granulateur pour former des granules ayant un degré d'humidite compris entre 14 et 18%,
e) on introduit dans le four, sous forme d'un courant de pâte, la pâte produite au cours de l'étape b) et non utilisée à l'étape d),
f) on injecte dans le courant de pâte, à l'entrée du four, les granules produits à l'etape d).

4. Procédé suivant 3, caractérisé en ce que l'on amène au granulateur, en plus des matières d'ajout et de la pâte ou des poussières nécessaires pour former des granules à teneur en humidité comprise entre 14 et 18%, un excès de poussières de récupération, ainsi que la quantité de pâte nécessaire pour maintenir l'humidité de l'ensemble des matières admises au granulateur à la valeur désirée de 14 à 18%, et en ce que l'on sèche les granules ainsi formés préalablement à leur injection dans le courant de pâte à l'entrée du four.

## Claims

1. Wet process for the manufacture of cement, in which, in order to reduce the water content of the raw meal:
 —granules and a stream of paste, having different compositions in terms of solids, are injected at the entrance to the kiln, the total constituents contained in the granules and the stream of paste leading to the desired composition of the clinker produced,
 —the paste is obtained by making a slurry of only some of the constituents of the raw meal,
 —the stream of paste at the entrance to the kiln is formed of at least part of the paste thus obtained,
 —the granules are formed by feeding, into a granulator, at least the remainder of the constituents of the raw meal, at their natural moisture content, to which materials providing or absorbing water are added, if appropriate, in order to adjust the total moisture content of the material constituting the granules to a value of between 14 and 18%,
 —the granules are injected into the stream of paste at the entrance to the kiln, in a proportion complying with the permissible variations in the region of plasticity of the stream of paste in a wet-operating kiln.

2. Process according to 1, characterised in that at least the major part of the paste is formed with those constituents of the raw meal whose viscosity is most rapidly reduced by the addition of water, and in that those constituents of the raw meal which are not involved in the formation of the paste are fed into the granulator at their natural moisture content.

3. Process according to 1 and 2, characterised in that
a) the chalk is made into a slurry with water and fluidifiers,
b) the additives necessary to compensate the variations in grade of the chalk are made into a slurry and incorporated with the chalk, in variable proportions, in order to obtain a paste of constant grade with a water content of between 25 and 35% and preferably of between 26 and 28%,
c) the additives which, when mixed with the paste of constant grade, are necessary to give the desired composition of raw meal are fed into the granulator in constant proportions relative to the paste introduced into the kiln,
d) the total moisture content of the materials introduced into the granulator is adjusted, if appropriate, respectively with the aid of part of the paste obtained in the course of step b) in the case of a moisture deficit in the additives, and with the aid of the recovered dust in the case of a moisture excess, in order to form granules having a moisture content of between 14 and 18%.
e) the paste produced in the course of step b) and not used in step d) is introduced into the kiln in the form of a stream of paste,
f) the granules produced in step d) are injected into the stream of paste at the entrance to the kiln.

4. Process according to 3, characterised in that, in addition to the additives and the paste or the dust necessary to form granules having a moisture content of between 14 and 18%, an excess of recovered dust is fed into the granulator together with the amount of paste necessary to maintain the moisture content of all the materials introduced into the granulator at the desired value of 14 to 18%, and in that the granules thus formed are dried before being injected into the stream of paste at the entrance to the kiln.

**Patentansprüche**

1. Verfahren zur Herstellung von Zement auf nassem Wege, wobei zur Verminderung der Feuchte der Rohmehlmischung

—am Beschickungsende des Ofens Körner und ein Schlammstrom eingeführt werden, deren Trockenstoffgehalte unterschiedlich sind, während die Gesamtheit der in den Körnern und dem Schlammstrom enthaltenen Bestandteile zu der gewünschten Zusammensetzung des erzeugten Klinkers führen,

—der Schlamm durch Einschlämmung nur eines Teiles der Bestandteile der Rohmehlmischung gebildet wird,

—der Schlammstrom am Beschickungsende des Ofens von mindestens einem Teil des so gebildeten Schlammes gebildet wird,

—die Körner gebildet werden, indem mindestens die zu den Bestandteilen der Rohmehlmischung fehlenden Stoffe mit natürlicher Feuchte einem Granulierer zugeführt werden, wobei diesem gegebenenfalls wasserhaltige oder Wasser absorbierende Stoffe zugeführt werden, um die Gesamtfeuchte der die Körner bildenden Stoffe auf einen zwischen 14% und 18% liegenden Wert einzustellen, und

—die Körner in den Schlammstrom am Beschickungsende des Ofens in solchem Anteil eingeführt werden, daß die zulässigen Verschiebungen der plastischen Zone des Schlammstromes in einem im Naßverfahren arbeitenden Ofen eingehalten werden.

2. Verfahren nach Anspruch 1, dadurch gekennzeichnet, daß der Schlamm zumindest überwiegend mit denjenigen Bestandteilen der Rohmehlmischung gebildet wird, deren Viskosität durch Wasserzugabe am schnellsten herabgesetzt wird, und daß dem Granulierer die nicht bei der Bildung des Schlammes verwendeten Bestandteile der Rohmehlmischung mit natürlicher Feuchte zugeführt werden.

3. Verfahren nach Anspruch 1 und 2, dadurch gekennzeichnet, daß

a) Kreide mit Wasser und Flußmitteln vermischt wird,

b) Zuschlagstoffe eingeschlämmt und mit der Kreide zu variablen Anteilen vermischt werden, die zur Kompensation von Qualitätsschwankungen der Kreide erforderlich sind, um einen Schlamm von gleichbleibender Qualität mit einer Feuchte zwischen 25% und 35% und vorzugsweise zwischen 26% und 28% zu bilden,

c) dem Granulierer in gleichbleibenden Teilen bezogen auf den in den Ofen eingeführten Schlamm die notwendigen Zuschlagstoffe zugeführt werden, um nach Mischung mit dem Schlamm gleichbleibender Qualität die gewünschte Zusammensetzung der Rohmehlmischung zu bilden,

d) die Gesamtfeuchte der dem Granulierer zugeführten Stoffe so eingestellt wird, daß die erzeugten Körner eine Feuchte zwischen 14% und 18% haben, indem dem Granulierer erforderlichenfalls bei mangelnder Feuchte der ihm zugeführten Zuschlagstoffe im Verfahrensschritt b) erzeugter Schlamm bzw. bei zu großer Feuchte rückgewonnene Stäbe zugeführt werden,

e) in den Ofen der im Verfahrensschritt b) gebildete und nicht im Verfahrensschritt d) verbrauchte Schlamm als Schlammstrom eingeführt wird und

f) am Beschickungsende des Ofens die im Verfahrensschritt d) gebildeten Körner in den Schlammstrom eingebracht werden.

4. Verfahren nach Anspruch 3, dadurch gekennzeichnet, daß dem Granulierer zusätzlich zu den ihm zugeführten Zuschlagstoffen und dem Schlamm oder den Stäben, die zur Bildung von Körnern mit einer Feuchte zwischen 14% und 18% zugesetzt werden, ein Überschuß an rückgewonnenen Stäben sowie diejenige Menge an Schlamm zugeführt werden, die zur Einhaltung einer Gesamtfeuchte der dem Granulierer zugeführten Stoffe mit dem gewünschten Wert zwischen 14% und 18% erforderlich ist, und daß die so gebildeten Körner getrocknet werden, bevor sie in den Schlammstrom am Beschickungsende des Ofens eingebracht werden.